(19) Europäisches Patentamt
European Patent Office
Office européen des brevets

(11) **EP 4 177 794 A1**

(12) **EUROPEAN PATENT APPLICATION**

(43) Date of publication:
**10.05.2023 Bulletin 2023/19**

(21) Application number: **22184499.6**

(22) Date of filing: **12.07.2022**

(51) International Patent Classification (IPC):
***G06N 3/048*** (2023.01)

(52) Cooperative Patent Classification (CPC):
**G06N 3/084; G06N 3/045;** G06N 3/048

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.11.2021 JP 2021181901**

(71) Applicant: **FUJITSU LIMITED**
**Kawasaki-shi, Kanagawa 211-8588 (JP)**

(72) Inventor: **HASHIMOTO, Tetsutaro**
**Kawasaki-shi, 211-8588 (JP)**

(74) Representative: **Haseltine Lake Kempner LLP**
**Cheapside House**
**138 Cheapside**
**London EC2V 6BJ (GB)**

(54) **OPERATION PROGRAM, OPERATION METHOD, AND CALCULATOR**

(57)    An operation program including instructions which, when executed by a computer, cause the computer to execute processing including: performing first learning with a high-precision data type in each of layers included in a learning model; calculating a number of bits to be used for quantization in each of the layers, based on a threshold value that corresponds to a first quantization error and a degree of attenuation by accumulation of quantization errors in a case where quantization is performed in the first learning; and repeatedly performing second learning that includes quantization in a data type based on the calculated number of bits for each of the layers until the second learning converges.

## FIG. 3

**Description**

FIELD

The embodiment discussed herein is related to an operation program, an operation method, and a calculator.

BACKGROUND

A recognition rate of a deep neural network (DNN) has been improved by increasing a scale and a depth of the DNN. However, the increases in the scale and the depth increase the amount of operations in the DNN, and a learning time of the DNN also increases in proportion to the increase in the amount of operations.

In order to shorten the learning time of the DNN, a low-precision operation (LPO) of a floating-point 8-bit (FP8) or a floating-point 16-bit (FP16) may be used for learning (training) of the DNN. For example, when the operation of FP8 is used, since the parallelism of a single instruction multiple data (SIMD) operation may be increased four times as compared with an operation of a floating-point 32-bit (FP32), an operation time may be shortened to 1/4. In contrast to LPO of FP8 or FP16, the operation of FP32 may be referred to as a full precision operation (FPO). For example, a case where the operation of the DNN is changed from FPO to LPO by decreasing the number of bits of data such as a case where FP32 is changed to FP8 may be referred to as quantization. An operation of a DNN in which FPO and LPO are mixed may be referred to as a mixed precision operation (MPO). In learning of the DNN using MPO (mixed precision training: MPT), since FPO is performed for a layer in which a recognition rate decreases due to quantization, a layer in which LPO is performed and a layer in which FPO is performed coexist.

As a method for suppressing the decrease in the recognition rate due to the quantization, there is a technique for performing quantization at the time of output by executing accumulation by FPO while the parallelism of SIMD operations is increased by quantizing data. There is another technique for performing quantization at the time of an operation by representing a weighting factor with high-precision information. There is a technique for updating the weighting factor by FPO.

Japanese Laid-open Patent Publication No. 2020-113273 and U.S. Patent Application Publication No. 2020/0143282 are disclosed as related art.

SUMMARY

TECHNICAL PROBLEMS

In a case where learning is performed by MPT, it is desirable that a criterion for determining a layer in which an operation is executed by FPO is set. However, since the layer using FPO changes in accordance with a phase of the learning, it is difficult to determine the layer using FPO in advance.

For example, in all of the technique for performing accumulation by FPO, the technique for performing the quantization at the time of the operation using the weighting factor, and the technique for updating the weighting factor by FPO, the layer in which the quantization is performed is determined in advance, and it is difficult to determine, in accordance with the learning phase, the layer in which FPO is executed.

Therefore, the present disclosure has been made in view of the above circumstance, and an object of the present disclosure is to provide a computer-readable recording medium storing an operation program, an operation method, and a calculator that improve a recognition rate while a learning time of a learning model is shortened.

SOLUTION TO PROBLEM

According to an aspect of an embodiment, there is provided an operation program including instructions which, when executed by a computer, cause the computer to execute processing including: performing first learning with a high-precision data type in each of layers included in a learning model; calculating a number of bits to be used for quantization in each of the layers, based on a threshold value that corresponds to a first quantization error and a degree of attenuation by accumulation of quantization errors in a case where quantization is performed in the first learning; and repeatedly performing second learning that includes quantization in a data type based on the calculated number of bits for each of the layers until the second learning converges.

ADVANTAGEOUS EFFECT OF INVENTION

According to the present disclosure, the recognition rate may be improved while the learning time of the DNN is shortened.

BRIEF DESCRIPTION OF DRAWINGS

Embodiments are set out, by way of example only, with reference to the following drawings, in which:

FIG. 1 is a diagram illustrating an example of a configuration of a DNN;
FIG. 2 is a diagram for describing a quantization error caused by a dynamic range;
FIG. 3 is a block diagram of a DNN learning device;
FIG. 4 is a diagram illustrating attenuation corresponding to the magnitude of an error in the case of ResNet-50;
FIG. 5 is a diagram illustrating an error corresponding to a threshold value of attenuation;
FIG. 6 is a diagram illustrating an inner product in calculation of logits;
FIG. 7 is a diagram illustrating an example of syntax of processing of calculating the number of bits in quantization using a floating-point number in forward propagation;
FIG. 8 is a diagram illustrating an example of syntax of processing of calculating the number of bits in quantization using a floating-point number in backward propagation;
FIG. 9 is a diagram illustrating an example of syntax of processing of calculating the number of bits in quantization using an integer representation in forward propagation;
FIG. 10 is a diagram illustrating an example of syntax of processing of calculating the number of bits in quantization using an integer representation in backward propagation;
FIG. 11 is a block diagram illustrating details of a learning unit;
FIG. 12 is a diagram illustrating an example of a data flow in the learning unit;
FIGs. 13A and 13B illustrate a flowchart of learning processing performed by the DNN learning device; and
FIG. 14 is a hardware configuration diagram of a computer.

DESCRIPTION OF EMBODIMENTS

Hereinafter, an embodiment of a computer-readable recording medium storing an operation program, an operation method, and a calculator disclosed in the present application is described in detail based on the drawings. A computer-readable recording medium storing an operation program, an operation method, and a calculator disclosed in the present application are not limited to the following embodiment.

[Embodiment]

A value value of a floating-point operation is given by Expression (1). In Expression (1), s is a sign bit fixed to 1 bit, $N_{ebit}$ is the number of bits of an exponent part e, and $N_{mbit}$ is the number of bits of a significand part m. For example, in FP32, $N_{ebit} = 8$ and $N_{mbit} = 23$.

$$\text{value} = (-1)^s \left( 1 + \sum_{i=1}^{N_{mbit}} m_{-i} 2^{-i} \right) \times 2^{e - \left( 2^{N_{ebit}-1} - 1 \right)} \qquad \cdots (1)$$

In a case where there is no unnormalized data in input data, a value value of FPO when a shared exponent bias value b is applied to Expression (1) is given by Expressions (2) and (3). For example, Expression (2) is an Expression in a case where the value value is a normalized number. The shared exponent bias value b is a common single value in the unit of quantization.

$$\text{value} = (-1)^s \left( 1 + \sum_{i=1}^{N_{mbit}} m_{-i} 2^{-i} \right) \times 2^{e - \left( 2^{N_{ebit}-1} - 1 \right) + b} \qquad \cdots (2)$$

$$-126 \leq e - \left( 2^{N_{ebit}-1} - 1 \right) + b \leq 127 \qquad \cdots (3)$$

The shared exponent bias value b is given by the following Expression (4), and shifts a dynamic range of the floating-point operation illustrated in Expression (1). $e_{max}$ in Expression (4) is an exponential term of $f_{max}$ in Expression

(5), and f in Expression (5) is all elements to be quantized.

$$b = e_{max} - 2^{N_{ebit}-1} - 126 \qquad \cdots (4)$$

$$f_{max} = \max_{\forall f \in F}|f| \qquad \cdots (5)$$

<Influence of Quantization Error>

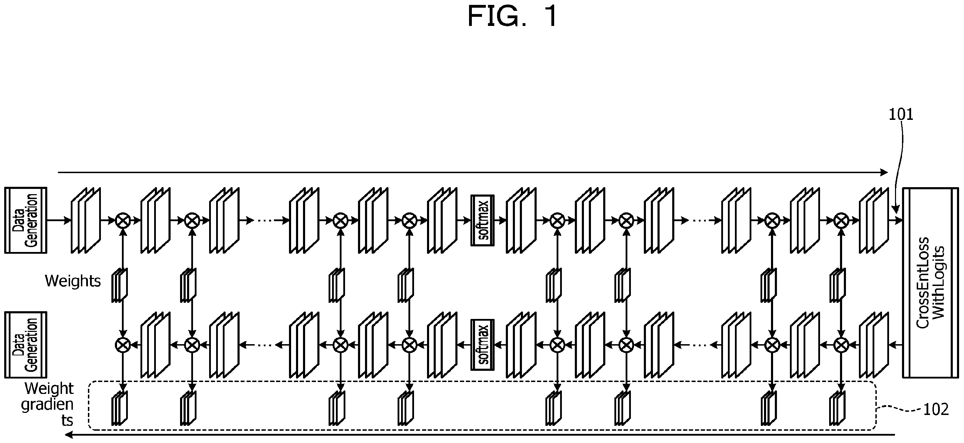

FIG. 1 is a diagram illustrating an example of a configuration of a DNN. In a case where calculation processing by the DNN is considered, the following points are influenced by a quantization error.

In the case of forward propagation, the influence of the quantization error eventually occurs in calculation of an estimated value. For example, it is considered that a decrease in a recognition rate or an increase in a loss obtained as a final result occurs. In the case of backward propagation, the influence of the quantization error eventually occurs in updating of a weighting factor. For example, there is a concern that the weighting factor obtained as the final result is an inappropriate value. Thus, a point for evaluating the quantization error is a quantization error of logits, which is an output 101 of a neural network before being passed to a Softmax activation function in the case of the forward propagation in FIG. 1, and is a quantization error of weight gradients 102 in the case of the backward propagation.

Several factors are considered as factors that cause the quantization error. One factor is a quantization error caused by a dynamic range. In a case where quantization is performed, the dynamic range is narrowed. Thus, an error occurs due to the occurrence of a region that is not represented.

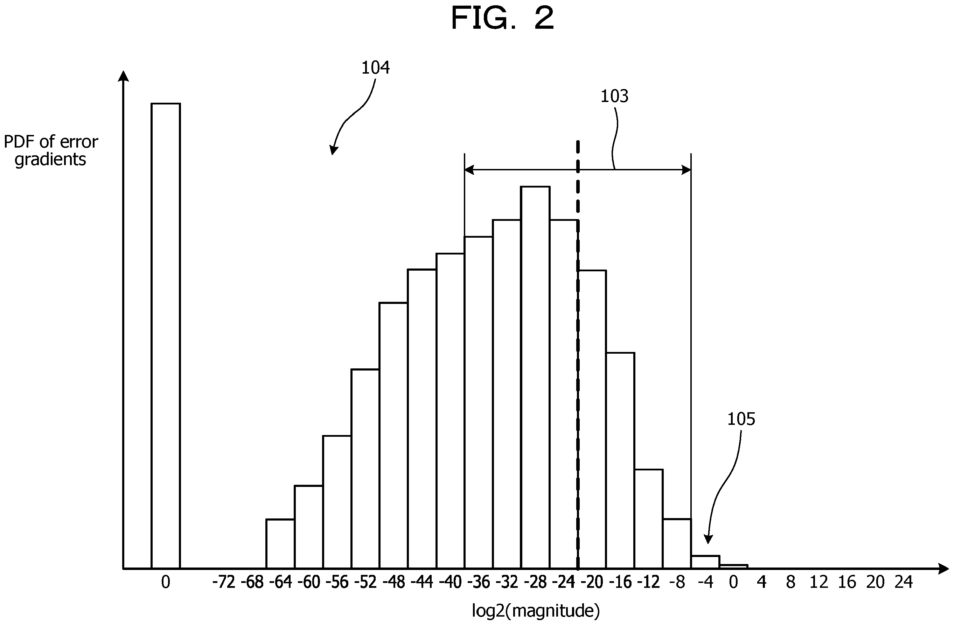

FIG. 2 is a diagram for describing the quantization error caused by the dynamic range. A horizontal axis in FIG. 2 represents the number of bits, and a vertical axis represents a value obtained by a probability density function (PDF) for an error gradient for each number of bits. For example, the graph illustrated in FIG. 2 represents a probability distribution for each bit used to represent each element included in a tensor before quantization input to a certain layer. A range 103 in FIG. 2 represents a dynamic range after quantization. For example, after quantization, elements included in a region 104 are zero, and elements included in a region 105 are saturated. A point 106 represents a maximum value after quantization.

The quantization error caused by the dynamic range is represented by the following Expression (6). $D_i^{sat}$ is an element of a region to be saturated, $D_i^{zero}$ is an element of a region to be zero, $N_{sat}$ is the number of elements to be saturated, $N_{zero}$ is the number of elements to be zero, and $N_{all}$ is the number of all elements. $D_{absmax}$ represents a maximum value after quantization.

$$E_Q^e \left\{ \sum_{i=1}^{N_{sat}} \left( \left| D_i^{sat} \right| - D_{absmax} \right) + \sum_{i=1}^{N_{zero}} \left| D_i^{zero} \right| \right\} / \sum_{i=1}^{N_{all}} |D_i| \qquad \cdots (6)$$

Another factor is a quantization error caused by the rounding of the significand part. For example, in a case where FP32 is converted into FP8, an absolute error at the time of rounding down is represented by the following Expression (7). $N_{mbit}$ is the number of bits of the significand part m. The absolute error is represented in the same manner at the time of rounding up.

$$\varepsilon_Q^m = (-1)^s \left(1 + \sum_{i=1}^{23} m_{-i} 2^{-i}\right) \times 2^{e-127}$$

$$- (-1)^s \left(1 + \sum_{i=1}^{N_{mbit}} m_{-i} 2^{-i}\right) \times 2^{e-127} \qquad \cdots (7)$$

$$= (-1)^s \left(\sum_{i=N_{mbit}+1}^{23} m_{-i} 2^{-i}\right) \times 2^{e-127}$$

A maximum value of the absolute error is represented by the following Expression (8).

$$\varepsilon_Q^m[\max] = 2^{-(N_{mbit}+1)} \times 2^{e-127} = 2^{-(N_{mbit}+1)+e-127} \qquad \cdots (8)$$

An influence of the quantization error caused by the above-described factors on the recognition rate will be described. In the case of a DNN of a classification problem (Classification), an output result in a case where the logits, which are output values of a network, are input to a Softmax function represented by the following Expression (9) is set as an estimated probability.

$$y[i,j] = \frac{\exp(x[i,j])}{\sum_j^{N_j} \exp(x[i,j])} \qquad \cdots (9)$$

When an error occurs in the logits due to quantization, an error also occurs in the estimated probability, and thus, the recognition rate decreases. For example, a case where a maximum value of the logits in an identical batch is x1, a second largest value is x2, and an error occurs between x1 and x2 due to quantization will be described. In this case, a case where the quantization error occurs as represented by the following Expression (10) is a case where the error is the largest.

$$x'_1 = x_1 - \varepsilon_Q^m$$

$$x'_2 = x_2 + \varepsilon_Q^m \qquad \cdots (10)$$

At this time, in a case where a magnitude relationship between x1 and x2 is reversed due to the quantization error, the recognition rate decreases. Accordingly, it is considered that the recognition rate does not decrease when the following Expression (11) is satisfied.

$$x'_1 - x'_2 = x_1 - x_2 - 2\varepsilon_Q^m > 0$$

$$\varepsilon_Q^m < \frac{x_1 - x_2}{2} \qquad \cdots (11)$$

The weight gradient is calculated from activation gradients that propagate from the top to the bottom of the DNN by an error backward propagation. Due to the quantization error caused by the dynamic range, when the activation gradients propagate to the bottom side and is attenuated, the absolute value of the weight gradients on the bottom side is also attenuated, and an absolute value with which the weighting factor is updated decreases. For example, since an amount by which a learning result is reflected in the weighting factor decreases, a learning amount for obtaining the same learning result increases.

<Configuration of DNN Learning Device>

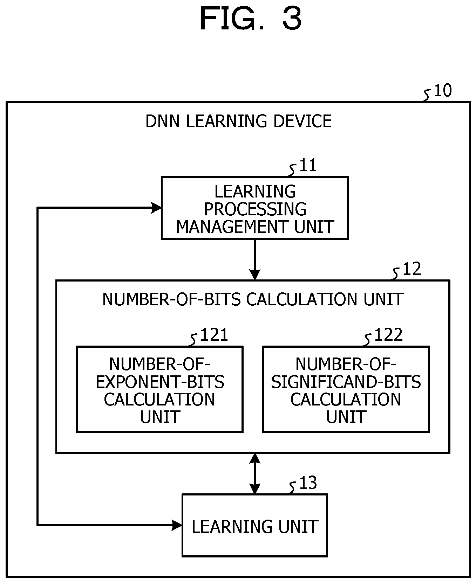

FIG. 3 is a block diagram of a DNN learning device according to an embodiment. In order to improve the recognition rate by suppressing the occurrence of the quantization error as described above, a DNN learning device 10 according to the present embodiment performs learning (training) by obtaining the number of bits to be used for the quantization in each of layers. For example, information processing apparatuses such as various computers may be adopted as the DNN learning device 10.

The DNN learning device 10 executes learning processing of the DNN and inference processing using the learned DNN. The DNN learning device 10 executes the learning of the DNN by repeating learning in units of epochs that include a plurality of iterations. As illustrated in FIG. 3, the DNN learning device 10 includes a learning processing management unit 11, a number-of-bits calculation unit 12, and a learning unit 13.

The learning processing management unit 11 performs overall management of the learning processing. The learning processing management unit 11 has an epoch number of a timing at which the quantization is reviewed in advance. Hereinafter, an epoch at the timing at which the quantization is reviewed is referred to as a "review epoch". The learning processing management unit 11 has the number of times of iterations included in one epoch in advance.

Upon receiving an instruction to start learning, the learning processing management unit 11 causes the learning unit 13 to start the learning of the DNN. The learning processing management unit 11 counts the number of times of iterations in a first epoch. Thereafter, when a last iteration in the first epoch is executed, the learning processing management unit 11 instructs the number-of-bits calculation unit 12 to calculate the number of bits to be used for the quantization.

Subsequently, the learning processing management unit 11 counts epochs executed by the learning unit 13, and obtains an epoch number of an epoch to be executed next. In a case where the learning unit 13 executes a second epoch, the learning processing management unit 11 instructs the learning unit 13 to reflect the number of bits to be used for the quantization determined in the last iteration of the first epoch.

Thereafter, the learning processing management unit 11 determines whether or not the epoch number to be executed next by the learning unit 13 is an epoch number of the review epoch. In a case where the epoch number to be executed next by the learning unit 13 is not the epoch number of the review epoch, the learning processing management unit 11 causes the learning unit 13 to continue learning using quantization in a data type being used at this point in time in each of the layers.

By contrast, in a case where the epoch number executed by the learning unit 13 is the epoch number of the review epoch, the learning processing management unit 11 notifies the learning unit 13 of the review of the quantization. The learning processing management unit 11 counts the number of times of iterations in the review epoch and acquires an iteration number. Thereafter, in a case where the current iteration reaches a last iteration in the review epoch, the learning processing management unit 11 instructs the number-of-bits calculation unit 12 to calculate the number of bits to be used for the quantization.

In a case where an epoch next to the review epoch is executed, the learning processing management unit 11 instructs the learning unit 13 to reflect the number of bits to be used for the quantization determined in the last iteration of the review epoch.

For more appropriate quantization, it is preferable that the review epochs are be provided at a plurality of timings. In a case where a plurality of review epochs are provided, for each epoch at the timing at which the quantization is reviewed, the learning processing management unit 11 repeatedly reviews the number of bits by notifying the learning unit 13 of the review of the quantization and causing the number-of-bits calculation unit 12 to calculate the number of bits to be used for the quantization.

The number-of-bits calculation unit 12 receives an instruction to calculate the number of bits to be used for the quantization from the learning processing management unit 11. The number-of-bits calculation unit 12 calculates the number of bits of the exponent part and the number of bits of the significand part to be used for the quantization. Hereinafter, the number of bits of the exponent part is referred to as the "number of exponent bits", and the number of bits of the significand part is referred to as the "number of significand bits". The number-of-bits calculation unit 12 notifies the learning unit 13 of the calculated number of exponent bits and the calculated number of significand bits.

Hereinafter, the details of the calculation, by the number-of-bits calculation unit 12, of the number of exponent bits and the number of significand bits to be used for the quantization will be described. As illustrated in FIG. 3, the number-of-bits calculation unit 12 includes a number-of-exponent-bits calculation unit 121 and a number-of-significand-bits calculation unit 122.

The number-of-exponent-bits calculation unit 121 sets a threshold value for the quantization error and obtains the number of exponent bits for each layer. When the quantization is repeated, the quantization error is accumulated. Since a value having a large absolute value is saturated and a small absolute value is zero by quantization, a total sum of absolute values of all elements of the tensor is attenuated by an amount corresponding to the quantization error.

The quantization error per quantization is $E_Q{}^e$. At this time, in order to set a value after the attenuation in a case where quantization is performed $N_Q$ times to be equal to or greater than T in terms of a relative value, there is the necessity for the quantization error to satisfy the following Expression (12). In this case, T is a threshold value of the attenuation, and is a value that defines an upper limit of a quantization error of a value of one quantization.

$$\left(1 - E_Q^e\right)^{N_Q} \geq T \qquad \cdots (12)$$

For example, the quantization error per quantization is represented by the following Expression (13) in terms of a relative value.

$$E_Q^e \leq 1 - T^{1/N_Q} \qquad \cdots (13)$$

For example, in the case of ResNet-50, since $N_Q$ = 112, when T = 0.9, $E_Q^e$ = 0.00083585.

The calculation of the number of bits of the exponent part that satisfies a condition of the quantization error represented by Expression (13) obtained herein will be described. The number-of-exponent-bits calculation unit 121 sets activation of top as a tensor to be analyzed in the case of the forward propagation, and sets a gradient of bottom_diff as a tensor to be analyzed in the case of the backward propagation.

The number-of-exponent-bits calculation unit 121 calculates a total sum of the absolute values of all the elements of the tensor. The total sum of the absolute values of all the elements of the tensor is represented by $\Sigma|D[i]|$.

Subsequently, the number-of-exponent-bits calculation unit 121 sorts the elements of the tensor in ascending order of the absolute values. The sorted array is represented as $D_{abs}[1:N_{all}]$.

Subsequently, the number-of-exponent-bits calculation unit 121 sets the number of elements to be saturated in quantization to be zero. For example, the number-of-exponent-bits calculation unit 121 sets a quantization range such that a maximum value after quantization matches a maximum value of the elements of the tensor. For example, a maximum value of a dynamic range after quantization is set to match the maximum value of the graph in FIG. 2. In this case, since there is no element to be saturated in quantization in Expression (6), $E_Q^e$ which is the quantization error per quantization is represented by the following Expression (14).

$$E_Q^e = \sum_{i=1}^{N_{zero}} |D_i^{zero}| \Big/ \sum_{i=1}^{N_{all}} |D_i| \qquad \cdots (14)$$

The number-of-exponent-bits calculation unit 121 adds the sorted array in order from 1 up to an upper limit that satisfies the following Expression (15) obtained from Expression (13).

$$\sum_{i=1}^{N_{zero}} |D_{abs}[i]| \Big/ \sum_{i=1}^{N_{all}} |D[i]| \leq 1 - T^{1/N_Q} \qquad \cdots (15)$$

$D_{abs}[N_{zero}]$, which is an element added last in this case, is a maximum value that satisfies Expression (13) that defines the quantization error.

Subsequently, the number-of-exponent-bits calculation unit 121 calculates a dynamic range $R_{dyn}$ of the tensor by using the following Expression (16).

$$R_{dyn} = \log2(|D_{abs}[N_{all}]|) - \log2(|D_{abs}[N_{zero}]|) \qquad \cdots (16)$$

Due to the use of the dynamic range represented by Expression (16), the number-of-exponent-bits calculation unit 121 calculates the number of bits of the exponent part by using the following Expression (17).

$$N_{ebit} = \left\lceil \log2\left(R_{dyn} + 3 - N_{mbit}\right)\right\rceil \qquad \cdots (17)$$

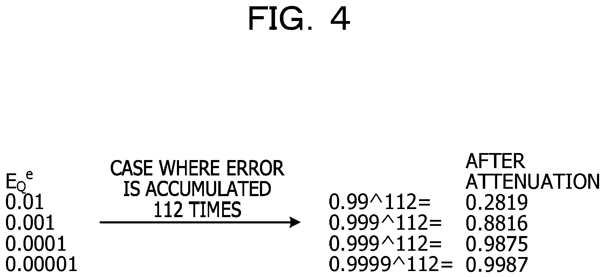

A range of the value of T that is the threshold value of the attenuation will be described. FIG. 4 is a diagram illustrating the attenuation corresponding to the magnitude of an error in the case of ResNet-50. At ResNet-50, the quantization is repeated 112 times. Details of the quantization are 48 times in Convolution, 48 times in BatchNorm, and 16 times in eltwise. Thus, in the case of ResNet-50, when an error is accumulated, the error is attenuated as illustrated in FIG. 4 in accordance with $E_Q^e$. For example, in a case where $E_Q^e$, which is the quantization error per quantization, is 0.01, when an original numerical value is 1, 0.2919, which is a value obtained by raising 0.99 to the 112-th power, is a value after the attenuation.

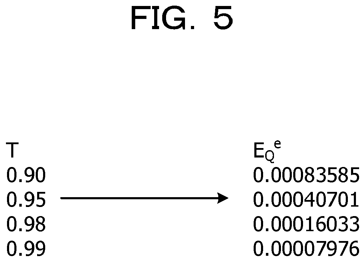

FIG. 5 is a diagram illustrating the error corresponding to the threshold value. For example, in a case where the threshold value T of the attenuation is set to each of values of 0.90, 0.95, 0.98, and 0.99, each value of $E_Q^e$ that is the error is obtained as illustrated in FIG. 5. Since the learning amount increases in accordance with the attenuation in order to obtain the same recognition precision, it is preferable that a lower limit of the threshold value of the attenuation is determined such that the learning amount does not increase much. When the threshold value of the attenuation is increased, a range in which the error due to the quantization is recognized is narrowed and the quantization is not performed. Thus, it is preferable that an upper limit of the threshold value of the attenuation in which the error of the quantization is recognized to some extent. Thus, for example, T that is the threshold value of the attenuation is set to 0.90 to 0.95 or the like based on FIG. 5.

Referring back to FIG. 3, the description is continued. The number-of-significand-bits calculation unit 122 obtains the number of significand bits for each layer. As described above, the error in the rounding of the significand part is represented by Expression (8). In MPT, the logits, which are input values of the Softmax function, take values of a data type of FP32. Accordingly, it may be assumed that the calculation of the logits is also performed by FPO. In this case, the number of significand bits may be obtained by expressing how much the quantization error of the tensor input to an inner product to be used to calculate the logits is accumulated in the logits.

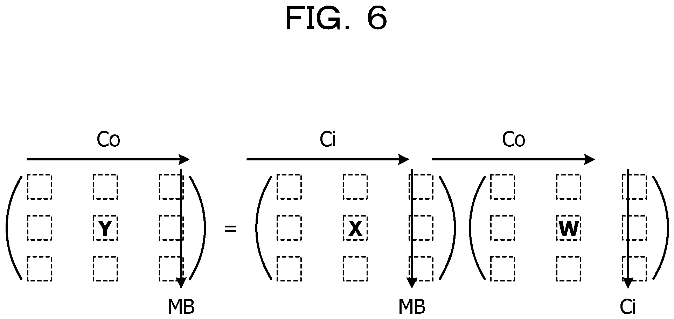

The inner product is represented by the following Expression (18). FIG. 6 is a diagram illustrating the inner product in the calculation of the logits. FIG. 6 illustrates an operation of the inner product in a case where the error does not occur. X in FIG. 6 is an input value for the calculation of the logits, and W is a weighting factor. Y in FIG. 5, which is a calculation result by Expression (18), represents the logits.

$$y(i,j) = \sum_{k=1}^{Ci} x(i,k) \cdot w(k,j) \qquad \cdots (18)$$

When a quantization error $\varepsilon_Q^m$ is uniformly given to X, since an inner product number of one element of Y is Ci, an input value of calculation of the logits in a case where an error is included is represented by the following Expression (19), and the logits are represented by the following Expression (20). $\varepsilon_Q^m$ is a relative error in the case of the quantization error $\varepsilon_Q^m$.

$$x'(i,k) = \left(1 + E_Q^m\right) \cdot x(i,k) = x(i,j) + \varepsilon_Q^m \qquad \cdots (19)$$

$$y'(i,j) = \left(1 + E_Q^m\right) \cdot y(i,j) = y(i,j) + Ci \cdot \varepsilon_Q^m \cdot \sum w \qquad \cdots (20)$$

The quantization error is a uniform distribution having randomness and also having positive and negative signs. Since the uniform distribution does not have reproducibility, a linear sum is not a uniform distribution, and the quantization error has a protrusion type distribution function such as a normal distribution in a distribution form by repeating the linear sum. Accordingly, the probability distribution of the quantization error may be approximated by the normal distribution.

Since the normal distribution has reproducibility, a linear combination of random variables Xi according to a normal distribution represented by Expression (21) follows a normal distribution represented by Expression (22). When $\alpha = 1$, $\mu_i = \mu$, and $\sigma_i = \sigma$, $N(n\mu, n\sigma^2)$ is obtained.

$$\sum_{i=1}^{n} a_i X_i \qquad \cdots (21)$$

$$N \left( \sum_{i=1}^{n} a_i \mu_i, \sum_{i=1}^{n} a_i^2 \sigma_i^2 \right) \qquad \cdots (22)$$

As described above, since the quantization error may be approximated to the normal distribution, the quantization error may be handled as following the normal distribution, and when a value having the quantization error is added Nadd times, a total value in a case where the error is maximized is represented by the following Expression (23). From the above, a variation amount due to the error may be relieved by the square root of the number of times of addition. Thus, since the quantization error in Expression (15) described above is leveled by the number of additions of Ci times, the error may be relieved by the square root of Ci.

$$N_{add} \cdot \mu \pm \sqrt{N_{add} \cdot \sigma^2} = N_{add} \cdot \left( \mu \pm \frac{\sigma}{\sqrt{N_{add}}} \right) \qquad \cdots (23)$$

When W, which is the weighting factor, is set to a normal distribution of [-1, 1], the accumulation of values asymptotically approaches 0.4 on a positive side. In a case where a standard deviation is represented by $\sigma$ and $4\sigma$ is 1, the accumulation of the values is 0.1. Since the accumulation of values asymptotically approaches -0.4 on a negative side in the same manner, a total sum becomes zero in all the weighting factors W. Since a term of the quantization error $\varepsilon_Q^m$ remains, the influence on the negative side is reduced to half. Accordingly, the total sum of the weighting factors W may be relieved to 0.4/4/2 = 0.05.

From the above, the logits represented by Expression (20) are relieved and represented by the following Expression (24).

$$y'(i,j) = \left( 1 + \frac{E_Q^m}{\sqrt{Ci}} \right) \cdot y(i,j) = y(i,j) + \sqrt{Ci} \cdot \varepsilon_Q^m \cdot 0.05 \qquad \cdots (24)$$

In this case, it is preferable that a condition in which the recognition rate represented by Expression (11) does not decrease becomes Expression (25) below, and that the quantization error eventually satisfies Expression (26) below.

$$\sqrt{Ci} \cdot \varepsilon_Q^m \cdot 0.05 < \frac{x_1 - x_2}{2} \qquad \cdots (25)$$

$$\varepsilon_Q^m < \frac{x_1 - x_2}{2 \times 0.05\sqrt{Ci}} \qquad \cdots (26)$$

Since a maximum value of the quantization error in rounding processing of the significand part is represented by Expression (8), the maximum value may be represented by the following Expression (27).

$$2^{-(N_{mbit}+1)+e-127} < \frac{x_1 - x_2}{2 \times 0.05\sqrt{Ci}} \qquad \cdots (27)$$

The following Expression (28) for obtaining the number of bits of the significand part is obtained by deforming Expression (27).

$$N_{mbit} > \left\lceil e - 128 - \log 2\left(\frac{x_1 - x_2}{2 \times 0.05\sqrt{C_i}}\right)\right\rceil \qquad \cdots (28)$$

$$e = \lfloor \log 2(V_{max})\rfloor + 127$$

Thus, the number-of-significand-bits calculation unit 122 calculates the number of significand bits for each layer by using Expression (28).

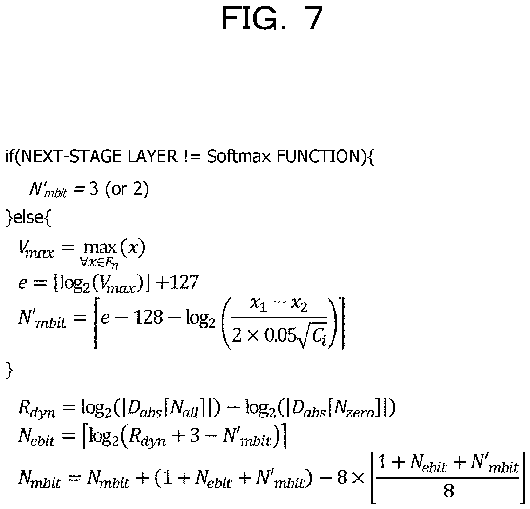

An example of syntax representing processing executed by the number-of-exponent-bits calculation unit 121 and the number-of-significand-bits calculation unit 122 will be described. FIG. 7 is a diagram illustrating an example of syntax of processing of calculating the number of bits in quantization using a floating-point number in the forward propagation. Fn in a fourth line in FIG. 7 represents all elements of an output tensor n. x represents the logits of a Softmax function in a next stage. x1 in a sixth line in FIG. 7 represents a maximum value of the logits which are the input values of the Softmax function and x2 represents a second largest value of X1, respectively. Ci is an inner product number of a layer of the Softmax function in a previous stage. Dabs[1:Nall] is an array in which tensors are sorted in ascending order of absolute values. Dabs[Nall] is a value of a maximum absolute value of the tensors. Nzero is the number of elements that become zero at the time of quantization. Dabs[Nzero] may be obtained by adding up the sorted array in order from 1 until Expression (10) is not satisfied. A last line in FIG. 7 is based on the assumption that the number of bits is a multiple of 8. The last line in FIG. 7 may be represented by the following Expression (29) when the last line is described in an expression of the C language. For example, the number-of-exponent-bits calculation unit 121 and the number-of-significand-bits calculation unit 122 may calculate the number of bits (1, $N_{ebit}$, $N_{mbit}$) of the output tensor n by executing processing represented by the syntax illustrated in FIG. 6. This number of bits is the number of bits of a layer n+1.

$$N_{mbit} = N'_{mbit} + (1 + N_{ebit} + N'_{mbit})\%8 \qquad \cdots (29)$$

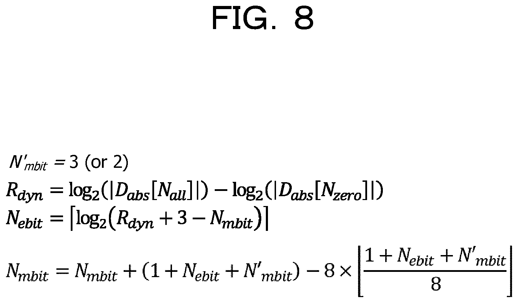

Next, FIG. 8 is a diagram illustrating an example of syntax of processing of calculating the number of bits in quantization using a floating-point number in the backward propagation. The last line in FIG. 8 may be represented by the following Expression (30) when the last line is described in an expression of the C language. For example, the number-of-exponent-bits calculation unit 121 and the number-of-significand-bits calculation unit 122 may calculate the number of bits (1, $N_{ebit}$, $N_{mbit}$) of the error gradient n by executing processing represented by the syntax illustrated in FIG. 8. This number of bits is the number of bits of a layer n-1.

$$N_{mbit} = N'_{mbit} + (1 + N_{ebit} + N'_{mbit})\%8 \qquad \cdots (30)$$

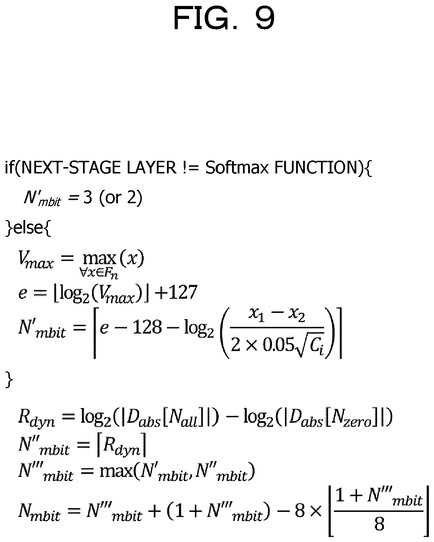

FIG. 9 is a diagram illustrating an example of syntax of processing of calculating the number of bits in quantization using an integer representation in the forward propagation. In the case of the quantization using the integer representation, since there is no exponent part, there is no necessity for the exponent bit. A last line in FIG. 9 may be represented by the following Expression (31) when the last line is described in an expression of the C language. For example, the number-of-exponent-bits calculation unit 121 and the number-of-significand-bits calculation unit 122 may calculate the number of bits (1, $N_{mbit}$) of the output tensor n by executing processing represented by the syntax illustrated in FIG. 9. This number of bits is the number of bits of a layer n+1.

$$N_{mbit} = N'''_{mbit} + (1 + N'''_{mbit})\%8 \qquad \cdots (31)$$

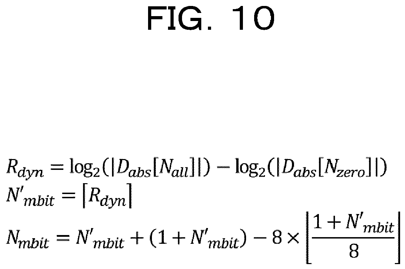

Next, FIG. 10 is a diagram illustrating an example of syntax of processing of calculating the number of bits in quantization using an integer representation in the backward propagation. A last line in FIG. 10 may be represented by the following Expression (32) when the last line is described in an expression of the C language. For example, the number-of-exponent-bits calculation unit 121 and the number-of-significand-bits calculation unit 122 may calculate the number of bits (1, $N_{mbit}$) of an error gradient n by executing processing represented by the syntax illustrated in FIG. 10. This number of bits is the number of bits of a layer n-1.

$$N_{mbit} = N'''_{mbit} + (1 + N'''_{mbit})\%8 \qquad \cdots (32)$$

Referring back to FIG. 3, the description is continued. The learning unit 13 receives an instruction to start learning from the learning processing management unit 11. The learning unit 13 sets data types of all the layers of the DNN to FP32. Thereafter, the learning unit 13 acquires training data and starts the learning of the DNN.

Thereafter, when the last iteration of the first epoch is ended, the learning unit 13 receives, as inputs, the number of exponent bits and the number of significand bits to be used in each of the layers of the DNN from the number-of-bits calculation unit 12. Subsequently, the learning unit 13 reflects the designated number of exponent bits and the designated number of significand bits in each of the layers. For example, the learning unit 13 sets a data type based on the designated number of exponent bits and the designated number of significand bits for each of the layers. The learning unit 13 learns the second and subsequent epochs by using the data type set for each of the layers.

Thereafter, the learning unit 13 determines whether or not the learning has converged and reached a target. In a case where the learning result has reached the target, the learning unit 13 ends the learning.

Meanwhile, in a case where the learning result has not reached the target, the learning unit 13 repeats the learning while maintaining the data type to be used for the quantization for each layer until a notification of the review of the quantization is received from the learning processing management unit 11. In a case where the notification of the review of the quantization is received, the learning unit 13 sets the data types of all the layers of the DNN to FP32. The learning unit 13 executes learning in a state where the data types of all the layers of the DNN are set to FP32. Thereafter, when the last iteration in the epoch at the timing at which the quantization is reviewed is ended, the learning unit 13 receives, as the inputs, the number of exponent bits and the number of significand bits to be used in each of the layers of the DNN from the number-of-bits calculation unit 12 and reflects the inputs in each of the layers. Until the learning converges and reaches the target, the learning unit 13 repeats the above processing.

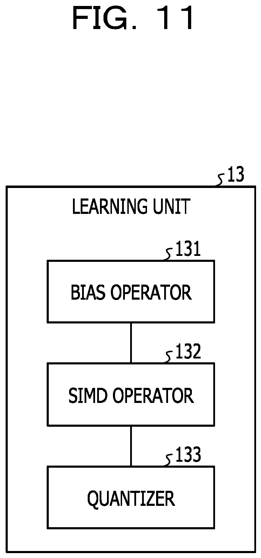

The learning processing by the learning unit 13 will be briefly described. FIG. 11 is a block diagram illustrating the details of the learning unit. The learning unit 13 includes a bias operator 131, a SIMD operator 132, and a quantizer 133.

Based on Expressions (4) and (5), the bias operator 131 calculates the shared exponent bias value b corresponding to the designated number of bits. The SIMD operator 132 calculates a tensor dst of FP32, which is a product-sum operation result, by performing a SIMD operation based on Expressions (2) and (3). The quantizer 133 calculates a tensor of a final result by quantizing the tensor dst of FP32 into a tensor having the designated number of bits. Quantization in the quantizer 133 may be performed by using a well-known technique such as calculating the exponent part and the significand part of all the elements of the tensor and performing stochastic rounding processing in the calculation of the significand part.

<Data Flow in Learning Unit>

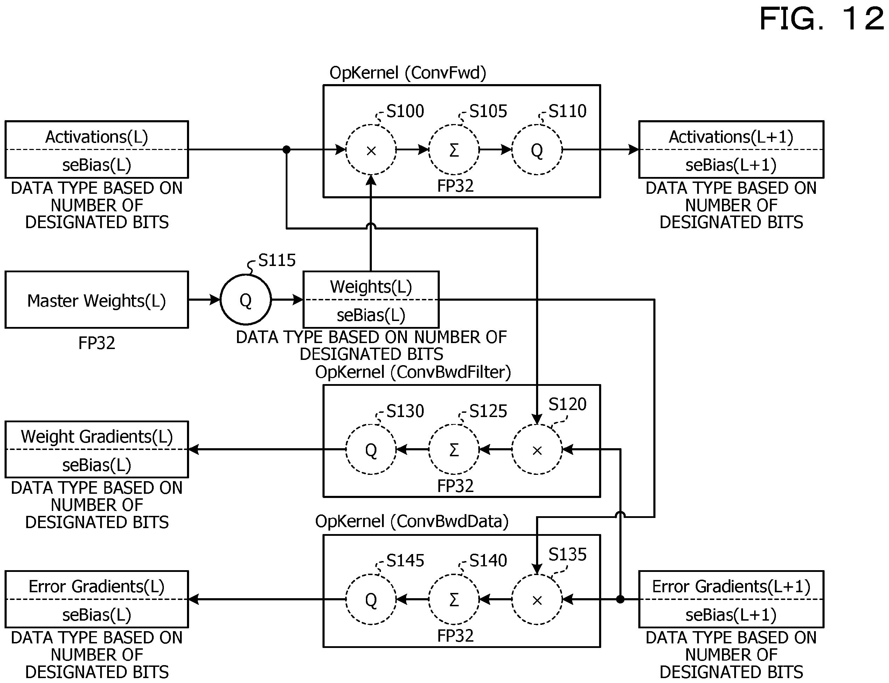

FIG. 12 is a diagram illustrating an example of a data flow in the learning unit.

In FIG. 12, in steps S100 and S105, a product-sum operation is performed on a dataset of an activation value (L) and a shared exponent bias value (L) corresponding to the designated number of bits and a dataset of a weight (L) and a shared exponent bias value (L) corresponding to the designated number of bits. The shared exponent bias value (L) corresponds to the shared exponent bias value b described above, and is calculated by the bias operator 131. The product-sum operation in steps S100 and S105 is performed by the SIMD operator 132.

In step S110, quantization for setting the product-sum operation result of FP32 in steps S100 and S105 to the designated number of bits is performed, the activation value (L) is updated to an activation value (L+1) and the shared exponent bias value (L) is updated to a shared exponent bias value (L+1) by the quantization in step S110. The quantization in step S110 is performed by the quantizer 133. However, in a case where the designated number of bits is FP32, the quantization is not actually performed.

In step S115, a weight (L) corresponding to the designated number of bits is obtained by quantizing a master weight (L) of FP32 to the designated number of bits. The quantization in step S115 is performed by the quantizer 133.

In steps S120 and S125, a product-sum operation is performed on a dataset of an activation value (L) and a shared exponent bias value (L) corresponding to the designated number of bits and a dataset of an error gradient (L+1) and a shared exponent bias value (L+1) corresponding to the designated number of bits. The shared exponent bias values (L) and (L+1) correspond to the shared exponent bias value b described above, and are calculated by the bias operator 131. The product-sum operation in S120 and S125 is performed by the SIMD operator 132.

In step S130, quantization for setting the product-sum operation result of FP32 in steps S120 and S125 to the designated number of bits is performed, and the weight gradient (L) and the shared exponent bias value (L) corresponding to the designated number of bits are obtained by the quantization in step S130. The quantization in step S130 is performed by the quantizer 133. However, in a case where the designated number of bits is FP32, the quantization is not actually performed.

In steps S135 and S140, a product-sum operation is performed on a dataset of a weight (L) and a shared exponent bias value (L) corresponding to the designated number of bits and a dataset of an error gradient (L+1) and a shared exponent bias value (L+1) corresponding to the designated number of bits. The shared exponent bias values (L) and (L+1) correspond to the shared exponent bias value b described above, and are calculated by the bias operator 131. The product-sum operation in steps S135 and S140 is performed by the SIMD operator 132.

In step S145, quantization for setting the product-sum operation result of FP32 in steps S135 and S140 to the designated number of bits is performed, and the error gradient (L+1) is updated to the error gradient (L) and the shared exponent bias value (L+1) is updated to the shared exponent bias value (L) by the quantization in step S145. The quantization in step S145 is performed by the quantizer 133. However, in a case where the designated number of bits is FP32, the quantization is not actually performed.

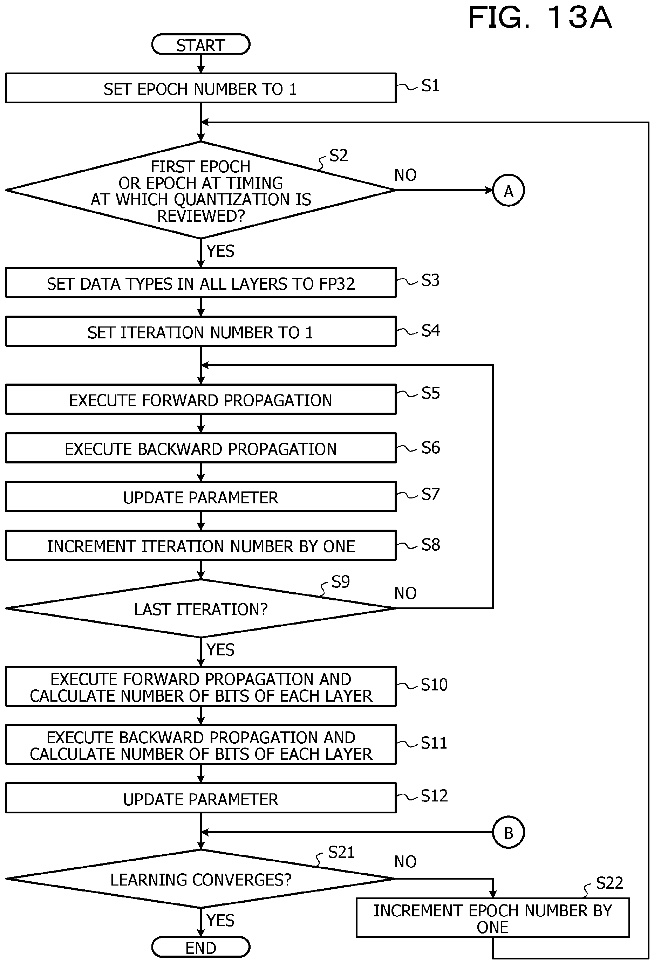

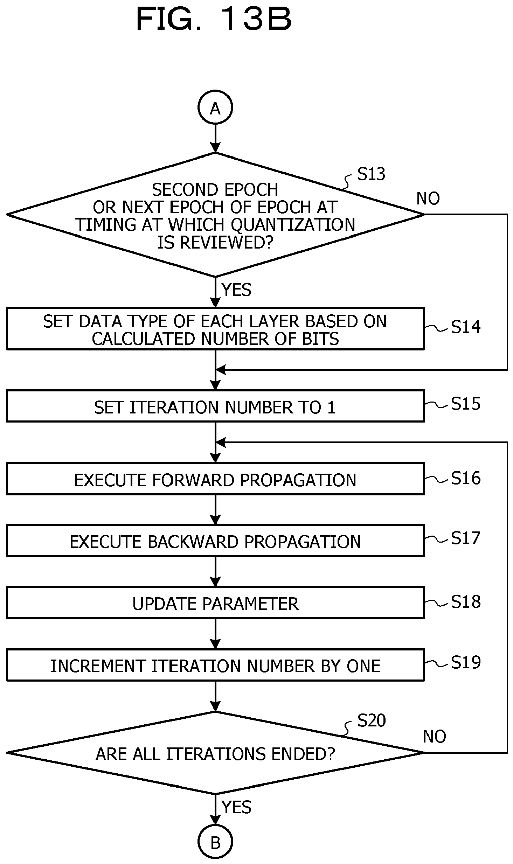

FIG. 13 (i.e., FIGs. 13A and 13B) is a flowchart of the learning processing by the DNN learning device according to the embodiment. Next, a flow of the learning processing performed by the DNN learning device 10 according to the embodiment will be described with reference to FIG. 13.

The learning processing management unit 11 notifies the learning unit 13 of the start of the learning processing. The learning processing management unit 11 sets the epoch number to 1 (step S1).

Subsequently, the learning processing management unit 11 determines whether the current epoch is the first epoch or the epoch at the timing at which the quantization is reviewed by using the epoch number (step S2).

In a case where the current epoch is any one of the first epoch or the epoch at the timing at which the quantization is reviewed (step S2: Yes), the learning processing management unit 11 notifies the learning unit 13 of the review of the quantization. The learning unit 13 sets the data types in all the layers to FP32 (step S3).

Subsequently, the learning processing management unit 11 sets the iteration number to 1 (step S4).

Subsequently, the learning unit 13 executes the forward propagation with the data types in all the layers set to FP32 (step S5).

Subsequently, the learning unit 13 executes the backward propagation with the data types in all the layers set to FP32 (step S6).

Subsequently, the learning unit 13 updates parameters of the DNN (step S7).

The learning processing management unit 11 increments the iteration number by one (step S8).

Subsequently, the learning processing management unit 11 determines whether or not a next iteration is a last iteration by using the iteration number (step S9). In a case where the next iteration is not the last iteration (step S9: No), the learning processing returns to step S5.

By contrast, in a case where the next iteration is the last iteration (step S9: Yes), the learning processing management unit 11 instructs the number-of-bits calculation unit 12 to calculate the number of bits for each layer. The learning unit 13 executes the forward propagation. The number-of-bits calculation unit 12 acquires the output tensor for each layer and calculates the number of bits to be used for the quantization in each of the layers (step S10).

Subsequently, the learning unit 13 executes the backward propagation. The number-of-bits calculation unit 12 acquires the error gradient for each layer, and calculates the number of bits to be used for the quantization in each of the layers (step S11).

The learning unit 13 updates the parameters of the DNN (step S12). Thereafter, the learning processing proceeds to step S21.

Meanwhile, in a case where the current epoch is neither the first epoch nor the epoch at the timing at which the quantization is reviewed (step S2: No), the learning processing management unit 11 determines whether the current epoch is the second epoch or a next epoch of the epoch at the timing at which the quantization is reviewed (step S13). In a case where the current epoch is neither the second epoch nor the next epoch of the epoch at the timing at which the quantization is reviewed (step S13: No), the learning processing proceeds to step S15.

By contrast, in a case where the current epoch is the second epoch or the next epoch of the epoch at the timing at which the quantization is reviewed (step S13: Yes), the learning processing management unit 11 instructs the learning unit 13 to reset the number of bits. The learning unit 13 sets the data type of each of the layers based on the number of bits for each layer calculated by the number-of-bits calculation unit 12 (step S14).

Subsequently, the learning processing management unit 11 sets the iteration number to 1 (step S15).

Subsequently, the learning unit 13 executes the forward propagation by using the data type of each of the layers set based on the number of bits for each layer calculated by the number-of-bits calculation unit 12 (step S16).

Subsequently, the learning unit 13 executes the backward propagation by using the data type of each of the layers set based on the number of bits for each layer calculated by the number-of-bits calculation unit 12 (step S17).

Subsequently, the learning unit 13 updates the parameters of the DNN (step S18).

The learning processing management unit 11 increments the iteration number by one (step S19).

Subsequently, the learning processing management unit 11 determines whether all the iterations of the current epoch have been ended by using the iteration number (step S20). In a case where the iteration to be executed remains (step S20: No), the learning processing returns to step S16.

By contrast, in a case where all the iterations of the current epoch have been ended (step S20: Yes), the learning processing proceeds to step S21.

The learning unit 13 determines whether or not the learning has converged and reached the target (step S21).

In a case where the learning has not converged (step S21: No), the learning processing management unit 11 increments the epoch number by one (step S22). Thereafter, the learning processing returns to step S2. By contrast, in a case where the learning has converged (step S21: Yes), the learning unit 13 ends the learning processing.

As described above, the DNN learning device according to the present embodiment calculates the number of exponent bits by setting the threshold value for the quantization error for each layer included in the DNN, and calculates the number of significand bits by using the condition in which the recognition rate does not decrease. In accordance with the calculated number of exponent bits and the calculated number of significand bits, the DNN learning device sets the data type to be used in each of the layers and performs learning. Accordingly, a decrease in the recognition rate is suppressed by using an appropriate data type in each of the layers of the DNN, and thus, the recognition rate may be improved while the learning time of the DNN is shortened.

For example, a case where learning by the DNN learning device 1 according to the present embodiment is performed by using ResNet-50 will be described. The last layer in ResNet-50 is fc1000 and the layer in the previous stage is pool5. In the forward propagation, an operation result of fc1000 is set to fc1000.Y, and an operation result of pool5 is set to pool5.Y. For example, pool5.Y is an input of fc1000 in the forward propagation. In the backward propagation, an input of fc1000 is set to fc1000.dY and an input of pool5 is set to pool5.dY. For example, pool5.dY is an operation result of fc1000 in the backward propagation.

In this case, in the forward propagation, the number-of-bits calculation unit 12 of the DNN learning device 1 changes the number of bits to be used for the quantization in fc1000 from $N_{mbit} = 12$ and $N_{ebit} = 0$ to $N_{mbit} = 23$ and $N_{ebit} = 8$ by using fc1000.Y. For the other layers, the DNN learning device 1 sets the number of bits to be used for the quantization to $N_{mbit} = 3$ and $N_{ebit} = 4$. Each of the numbers of bits is set so as to be 8, 16, or 32 bits in accordance with a sign bit of 1 bit.

In the backward propagation, the DNN learning device 1 changes the number of bits to be used for the quantization in fc1000 from $N_{mbit} = 3$ and $N_{ebit} = 5$ to $N_{mbit} = 23$ and $N_{ebit} = 8$ by using fc1000.dY. The DNN learning device 1 changes the number of bits to be used for the quantization in conv1 from $N_{mbit} = 3$ and $N_{ebit} = 5$ to $N_{mbit} = 23$ and $N_{ebit} = 8$ by using conv1.dY. The DNN learning device 1 changes the number of bits to be used for the quantization in resdw_branch2b from $N_{mbit} = 3$ and $N_{ebit} = 5$ to $N_{mbit} = 10$ and $N_{ebit} = 5$ by using resdw_branch2b.dY. "d" represents one numeral, and "w" represents one alphabet. For the other layers, the DNN learning device 1 sets the number of bits to be used for the quantization to $N_{mbit} = 3$ and $N_{ebit} = 4$.

However, since the layer for which the logit was calculated was FP32, fc1000.Y and fc1000.dY were set to FP32.

In a case where the data types of all the layers were FP32 ($N_{mbit} = 23$, $N_{ebit} = 8$), the reaching precision of the learning was 75.92%. In a case where the shared exponent bias was used with the data types of all the layers set to FP8 ($N_{mbit} = 3$, $N_{ebit} = 4$), the reaching precision of the learning was 75.26%, and the precision was lowered by 0.87% as compared with the case of FP32. By contrast, in a case where the number of bits and the shared exponent bias described above were used by using the DNN learning device 1 according to the present embodiment, the reaching precision of the learning was 75.71%, and the precision was lowered by 0.28% as compared with the case of FP32. For example, the precision was improved as compared with a case where the data types of all the layers were FP8 while the learning time was shortened as compared with a case where the data types of all the layers were FP32.

(Hardware Configuration)

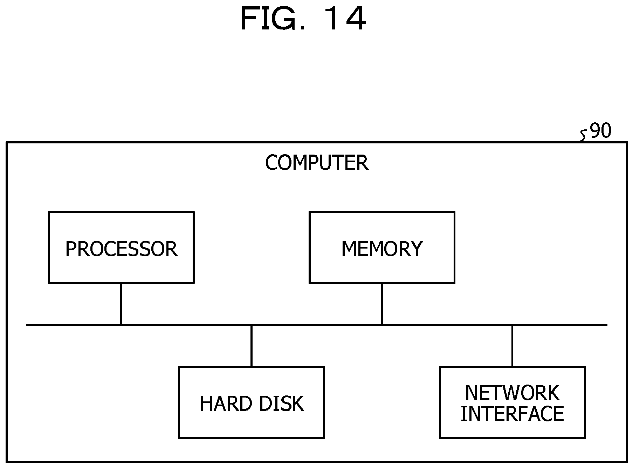

FIG. 14 is a hardware configuration diagram of a computer. The DNN learning device 1 is implemented by, for example, a computer 90 illustrated in FIG. 14. As illustrated in FIG. 14, the computer 90 includes a processor 91, a memory 92, a hard disk 93, and a network interface 94. The processor 91 is coupled to the memory 92, the hard disk 93, and the network interface 94 via a bus.

The network interface 94 is an interface that relays communication between the computer 90 and an external device.

The hard disk 93 is an auxiliary storage device. The hard disk 93 stores various programs that include programs for implementing the functions of the learning processing management unit 11, the number-of-bits calculation unit 12, and the learning unit 13 illustrated in FIG. 1.

The processor 91 reads the various programs from the hard disk 93, loads the programs in the memory 92, and executes the programs. Accordingly, the processor 91 implements the functions of the learning processing management unit 11, the number-of-bits calculation unit 12, and the learning unit 13 illustrated in FIG. 1.

**Claims**

1. An operation program comprising instructions which, when executed by a computer, cause the computer to execute processing comprising:

performing first learning with a high-precision data type in each layer included in a learning model;
calculating a number of bits to be used for quantization in each of the layers, based on a threshold value that corresponds to a first quantization error and a degree of attenuation by accumulation of quantization errors in a case where quantization is performed in the first learning; and
repeatedly performing second learning that includes quantization in a data type based on the calculated number of bits for each of the layers until the second learning converges.

2. The operation program according to claim 1, wherein the calculating of the number of bits includes calculation of a number of bits of an exponent part and a number of bits of a significand part.

3. The operation program according to claim 2, wherein an upper limit of the first quantization error with which an attenuation amount is equal to or less than the threshold value is obtained, and the number of bits of the exponent part is calculated based on the upper limit of the first quantization error.

4. The operation program according to claim 2 or 3, wherein a condition in which a recognition rate does not decrease is generated based on an output value of the learning model, an upper limit of the first quantization error that satisfies the condition in which the recognition rate does not decrease is obtained, and the number of bits of the significand part is calculated based on the upper limit of the first quantization error.

5. The operation program according to any preceding claim, wherein

the learning of the learning model that includes the first learning and the second learning is executed by repeating an epoch that includes a plurality of iterations,
the first learning is executed in a plurality of predetermined epochs,
a number of bits to be used for the quantization in each of the layers is calculated in a last iteration of the first learning in the predetermined epoch, and
the second learning is executed by maintaining the data type of the quantization in each of the layers until the learning reaches a next predetermined epoch or converges.

6. An operation method implemented by a computer, the operation method comprising:

performing first learning with a high-precision data type in each layer included in a learning model;
calculating a number of bits to be used for quantization in each of the layers, based on a threshold value that corresponds to a first quantization error and a degree of attenuation by accumulation of quantization errors in a case where quantization is performed in the first learning; and
repeatedly performing second learning that includes quantization in a data type based on the calculated number of bits for each of the layers until the second learning converges.

7. An operation apparatus comprising:

a memory; and
a processor coupled to the memory, the processor being configured to perform processing, the processing including:

performing first learning with a high-precision data type in each layer included in a learning model;
calculating a number of bits to be used for quantization in each of the layers, based on a threshold value that corresponds to a first quantization error and a degree of attenuation by accumulation of quantization errors in a case where quantization is performed in the first learning; and
repeatedly performing second learning that includes quantization in a data type based on the calculated number of bits for each of the layers until the second learning converges.

# FIG. 1

# FIG. 2

EP 4 177 794 A1

# FIG. 3

DNN LEARNING DEVICE — 10

LEARNING PROCESSING MANAGEMENT UNIT — 11

NUMBER-OF-BITS CALCULATION UNIT — 12

NUMBER-OF-EXPONENT-BITS CALCULATION UNIT — 121

NUMBER-OF-SIGNIFICAND-BITS CALCULATION UNIT — 122

LEARNING UNIT — 13

# FIG. 4

| $E_Q{}^e$ | CASE WHERE ERROR IS ACCUMULATED 112 TIMES | | AFTER ATTENUATION |
|---|---|---|---|
| 0.01 | | 0.99^112= | 0.2819 |
| 0.001 | | 0.999^112= | 0.8816 |
| 0.0001 | | 0.999^112= | 0.9875 |
| 0.00001 | | 0.9999^112= | 0.9987 |

# FIG. 5

| T | $E_Q{}^e$ |
|---|---|
| 0.90 | 0.00083585 |
| 0.95 $\longrightarrow$ | 0.00040701 |
| 0.98 | 0.00016033 |
| 0.99 | 0.00007976 |

# FIG. 6

# FIG. 7

if(NEXT-STAGE LAYER != Softmax FUNCTION){

$\quad N'_{mbit} = 3$ (or 2)

}else{

$\quad V_{max} = \max_{\forall x \in F_n}(x)$

$\quad e = \lfloor \log_2(V_{max}) \rfloor + 127$

$\quad N'_{mbit} = \left\lceil e - 128 - \log_2\left(\dfrac{x_1 - x_2}{2 \times 0.05\sqrt{C_i}}\right)\right\rceil$

}

$R_{dyn} = \log_2(|D_{abs}[N_{all}]|) - \log_2(|D_{abs}[N_{zero}]|)$

$N_{ebit} = \left\lceil \log_2\left(R_{dyn} + 3 - N'_{mbit}\right)\right\rceil$

$N_{mbit} = N_{mbit} + (1 + N_{ebit} + N'_{mbit}) - 8 \times \left\lceil \dfrac{1 + N_{ebit} + N'_{mbit}}{8}\right\rceil$

# FIG. 8

$$N'_{mbit} = 3 \text{ (or 2)}$$

$$R_{dyn} = \log_2(|D_{abs}[N_{all}]|) - \log_2(|D_{abs}[N_{zero}]|)$$

$$N_{ebit} = \lceil \log_2(R_{dyn} + 3 - N_{mbit}) \rceil$$

$$N_{mbit} = N_{mbit} + (1 + N_{ebit} + N'_{mbit}) - 8 \times \left\lfloor \frac{1 + N_{ebit} + N'_{mbit}}{8} \right\rfloor$$

# FIG. 9

```
if(NEXT-STAGE LAYER != Softmax FUNCTION){
```
$$N'_{mbit} = 3 \text{ (or 2)}$$
```
}else{
```
$$V_{max} = \max_{\forall x \in F_n} (x)$$
$$e = \lfloor \log_2(V_{max}) \rfloor + 127$$
$$N'_{mbit} = \left\lceil e - 128 - \log_2\left(\frac{x_1 - x_2}{2 \times 0.05\sqrt{C_i}}\right)\right\rceil$$
```
}
```

$$R_{dyn} = \log_2(|D_{abs}[N_{all}]|) - \log_2(|D_{abs}[N_{zero}]|)$$
$$N''_{mbit} = \lceil R_{dyn} \rceil$$
$$N'''_{mbit} = \max(N'_{mbit}, N''_{mbit})$$
$$N_{mbit} = N'''_{mbit} + (1 + N'''_{mbit}) - 8 \times \left\lceil \frac{1 + N'''_{mbit}}{8} \right\rceil$$

# FIG. 10

$$R_{dyn} = \log_2(|D_{abs}[N_{all}]|) - \log_2(|D_{abs}[N_{zero}]|)$$

$$N'_{mbit} = \lceil R_{dyn} \rceil$$

$$N_{mbit} = N'_{mbit} + (1 + N'_{mbit}) - 8 \times \left\lfloor \frac{1 + N'_{mbit}}{8} \right\rfloor$$

# FIG. 11

13

LEARNING UNIT

131

BIAS OPERATOR

132

SIMD OPERATOR

133

QUANTIZER

# FIG. 12

OpKernel (ConvFwd)

Activations(L)
‒‒‒‒‒‒‒‒‒‒‒
seBias(L)

DATA TYPE BASED ON
NUMBER OF
DESIGNATED BITS

S100   S105   S110

(×) → (Σ) → (Q)

FP32

Activations(L+1)
‒‒‒‒‒‒‒‒‒‒‒
seBias(L+1)

DATA TYPE BASED ON
NUMBER OF
DESIGNATED BITS

Master Weights(L)

FP32

S115

(Q)

Weights(L)
‒‒‒‒‒‒‒‒‒‒‒
seBias(L)

DATA TYPE BASED ON NUMBER OF
DESIGNATED BITS

OpKernel (ConvBwdFilter)

Weight Gradients(L)
‒‒‒‒‒‒‒‒‒‒‒
seBias(L)

DATA TYPE BASED ON
NUMBER OF
DESIGNATED BITS

S130   S125   S120

(Q) ← (Σ) ← (×)

FP32

OpKernel (ConvBwdData)

Error Gradients(L)
‒‒‒‒‒‒‒‒‒‒‒
seBias(L)

DATA TYPE BASED ON
NUMBER OF
DESIGNATED BITS

S145   S140   S135

(Q) ← (Σ) ← (×)

FP32

Error Gradients(L+1)
‒‒‒‒‒‒‒‒‒‒‒
seBias(L+1)

DATA TYPE BASED ON
NUMBER OF
DESIGNATED BITS

EP 4 177 794 A1

# FIG. 13A

START

SET EPOCH NUMBER TO 1 — S1

FIRST EPOCH OR EPOCH AT TIMING AT WHICH QUANTIZATION IS REVIEWED? — S2 — NO → (A)

YES

SET DATA TYPES IN ALL LAYERS TO FP32 — S3

SET ITERATION NUMBER TO 1 — S4

EXECUTE FORWARD PROPAGATION — S5

EXECUTE BACKWARD PROPAGATION — S6

UPDATE PARAMETER — S7

INCREMENT ITERATION NUMBER BY ONE — S8

LAST ITERATION? — S9 — NO

YES

EXECUTE FORWARD PROPAGATION AND CALCULATE NUMBER OF BITS OF EACH LAYER — S10

EXECUTE BACKWARD PROPAGATION AND CALCULATE NUMBER OF BITS OF EACH LAYER — S11

UPDATE PARAMETER — S12

(B)

LEARNING CONVERGES? — S21 — NO → INCREMENT EPOCH NUMBER BY ONE — S22

YES

END

# FIG. 13B

A

S13

SECOND EPOCH
OR NEXT EPOCH OF EPOCH AT
TIMING AT WHICH QUANTIZATION
IS REVIEWED?

NO

YES

SET DATA TYPE OF EACH LAYER BASED ON
CALCULATED NUMBER OF BITS — S14

SET ITERATION NUMBER TO 1 — S15

EXECUTE FORWARD PROPAGATION — S16

EXECUTE BACKWARD PROPAGATION — S17

UPDATE PARAMETER — S18

INCREMENT ITERATION NUMBER BY ONE — S19

S20

ARE ALL ITERATIONS ENDED?

NO

YES

B

# FIG. 14

Europäisches
Patentamt

European
Patent Office

Office européen
des brevets

# EUROPEAN SEARCH REPORT

Application Number

EP 22 18 4499

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 792 748 A1 (FUJITSU LTD [JP]) 17 March 2021 (2021-03-17) * abstract * * paragraph [0002] – paragraph [0008] * * paragraph [0013] – paragraph [0020] * * paragraph [0022] – paragraph [0047] * * paragraph [0048] * | 1-7 | INV. G06N3/045 G06N3/048 |
| X | EP 3 772 023 A1 (SHANGHAI CAMBRICON INF TECH CO LTD [CN]) 3 February 2021 (2021-02-03) * abstract * * paragraph [0005] – paragraph [0013] * * paragraph [0023] – paragraph [0055] * * paragraph [0075] – paragraph [0120] * * paragraph [0127] – paragraph [0133] * * paragraphs [0149] – [0164] * * paragraph [0174] – paragraph [0180] * * claims 1-20; figures 1-12 * | 1-7 | |

TECHNICAL FIELDS
SEARCHED (IPC)

G06N

The present search report has been drawn up for all claims

| Place of search | Date of completion of the search | Examiner |
|---|---|---|
| Munich | 23 December 2022 | Eftimescu, Nicolae |

EPO FORM 1503 03.82 (P04C01)

## ANNEX TO THE EUROPEAN SEARCH REPORT
## ON EUROPEAN PATENT APPLICATION NO.

EP 22 18 4499

This annex lists the patent family members relating to the patent documents cited in the above-mentioned European search report.
The members are as contained in the European Patent Office EDP file on
The European Patent Office is in no way liable for these particulars which are merely given for the purpose of information.

23-12-2022

| Patent document cited in search report | | Publication date | Patent family member(s) | | Publication date |
|---|---|---|---|---|---|
| EP 3792748 | A1 | 17-03-2021 | CN | 112508167 A | 16-03-2021 |
| | | | EP | 3792748 A1 | 17-03-2021 |
| | | | JP | 2021043905 A | 18-03-2021 |
| | | | US | 2021081802 A1 | 18-03-2021 |
| EP 3772023 | A1 | 03-02-2021 | CN | 111652367 A | 11-09-2020 |
| | | | CN | 111652368 A | 11-09-2020 |
| | | | CN | 112085181 A | 15-12-2020 |
| | | | CN | 112085183 A | 15-12-2020 |
| | | | CN | 112085184 A | 15-12-2020 |
| | | | CN | 112085185 A | 15-12-2020 |
| | | | CN | 112085186 A | 15-12-2020 |
| | | | CN | 112085188 A | 15-12-2020 |
| | | | CN | 112085189 A | 15-12-2020 |
| | | | CN | 112085190 A | 15-12-2020 |
| | | | CN | 112085191 A | 15-12-2020 |
| | | | CN | 112085192 A | 15-12-2020 |
| | | | CN | 112085193 A | 15-12-2020 |
| | | | CN | 112400176 A | 23-02-2021 |
| | | | EP | 3770823 A1 | 27-01-2021 |
| | | | EP | 3772022 A1 | 03-02-2021 |
| | | | EP | 3772023 A1 | 03-02-2021 |
| | | | EP | 3998554 A1 | 18-05-2022 |
| | | | JP | 7166704 B2 | 08-11-2022 |
| | | | JP | 7167405 B2 | 09-11-2022 |
| | | | JP | 2021177369 A | 11-11-2021 |
| | | | JP | 2021179966 A | 18-11-2021 |
| | | | JP | 2021530769 A | 11-11-2021 |
| | | | KR | 20210011461 A | 01-02-2021 |
| | | | KR | 20210011462 A | 01-02-2021 |
| | | | KR | 20210018352 A | 17-02-2021 |
| | | | US | 2021286688 A1 | 16-09-2021 |
| | | | US | 2022261634 A1 | 18-08-2022 |
| | | | WO | 2020248423 A1 | 17-12-2020 |
| | | | WO | 2020248424 A1 | 17-12-2020 |

EPO FORM P0459

For more details about this annex : see Official Journal of the European Patent Office, No. 12/82

**EP 4 177 794 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020113273 A
- US 20200143282